# FASCICULE DE BREVET EUROPEEN

(11) **EP 0 633 060 B1**
(45) Date de publication et mention de la délivrance du brevet: **12.11.1997**
(21) Numéro de dépôt: 94104852.2
(22) Date de dépôt: 28.03.1994
(51) Int. Cl.: B01J 19/18, B01J 19/00, B01J 10/00, B01F 3/04

(54) **Appareillage de réaction gaz-liquide**
Vorrichtung für Gas-Flüssigkeit-Reaktionen
Apparatus for gas-liquid reactions

(30) Priorité: 08.07.1993 CH 2054/93
(43) Date de publication de la demande: 11.01.1995
(73) Titulaire: BIAZZI SA, CH-1816 Chailly, Montreux (CH); EKATO GmbH, D-79641 Schopfheim (DE)
(72) Inventeur: Fierz, Gérard, CH-1095 Lutry (CH); Forschner, Peter, D-79686 Hasel (DE); Landert, Jean-Pierre, CH-1820 Montreaux (CH); Marmillod, Pierre, CH-1814 La Tour-de-Peilz (CH)
(74) Mandataire: Micheli & Cie

(56) Documents cités:
- EP-A- 0 347 653
- DE-A- 3 429 355
- FR-A- 1 176 160
- GB-A- 1 112 582
- US-A- 3 400 051
- CHEMICAL ABSTRACTS, vol. 100, no. 26, 25 Juin 1984, Columbus, Ohio, US; abstract no. 212187z, P.SEICHTER ET AL. 'REACTOR FOR CATALYTIC HYDROGENATION IN THE LIQUID PHASE' page 123 ; & CS-B-213 247 (P.SEICHTER ET AL.)
- PATENT ABSTRACTS OF JAPAN vol. 14, no. 322 (C-739) 10 Juillet 1990 & JP-A-02 115 295 (KOA OIL CO. LTD.) 27 Avril 1990

## Description

La présente invention se rapporte à un appareillage de réaction gaz-liquide, par exemple pour la mise en oeuvre de réactions chimiques gaz-liquide telles que l'oxygénation, l'ozonation, l'amination, l'éthoxylation, l'hydrogénation catalytique, etc.

En chimie, les procédés qui font intervenir des réactions gaz-liquide sont extrêmement nombreux. Pour assurer le contact entre un liquide comportant souvent un catalyseur solide en suspension, et le gaz réactif, nombre de techniques différentes peuvent être utilisées. Les solutions habituelles font intervenir soit l'agitation du liquide par le gaz lui-même, soit l'introduction de gaz dans un réacteur équipé d'une agitation mécanique, soit un système avec un contacteur gaz-liquide du type éjecteur. Toutefois, en raison de la complexité des paramètres influençant la réaction en milieu hétérogène, tels que la vitesse de transport des corps réagissant à l'interface réactionnel (transfert de matière), le comportement hydrodynamique du milieu et sa capacité de mise en suspension d'un catalyseur hétérogène, la désactivation de ce dernier en l'absence de saturation par le gaz réactif, les phénomènes thermiques importants (transfert de chaleur), la réalisation d'un réacteur performant est toujours difficile, surtout en présence de réactions secondaires ou parallèles qui affectent la sélectivité d'ensemble du procédé. Ces réactions de synthèse, particulièrement l'hydrogénation catalytique, sont très souvent réalisées sous des pressions pouvant atteindre 100 bar et des températures variant de 30 à 300°C, ce qui occasionne des contraintes mécaniques importantes à l'appareillage utilisé et dont la maîtrise est souvent problématique avec des installations industrielles pour lesquelles il est essentiel de respecter des exigences élevées en matière de sécurité, de fiabilité et d'entretien.

La présente invention a pour but la réalisation d'un nouveau réacteur approprié pour la mise en oeuvre de réactions gaz-liquide dans des conditions sûres et avantageuses, tant d'un point de vue de contrôle efficace et plus aisé des conditions opératoires, de productivité élevée, d'une qualité supérieure des produits de réaction, des consommations réduites de catalyseur et des facilités d'opération et d'entretien.

Le but précité est atteint par l'appareillage de réaction gaz-liquide selon l'invention, qui comporte un récipient étanche et résistant à la pression, un dispositif d'agitation rotatif assurant la mise en contact gaz-liquide et la circulation du contenu du récipient, et un dispositif échangeur de chaleur, et qui est caractérisé par le fait que ce dispositif échangeur de chaleur est constitué par un ensemble de plaques disposées approximativement verticalement autour du dispositif d'agitation et de manière à former un angle compris entre 0 et 70° par rapport au rayon dans le sens de rotation du dispositif d'agitation, et un fluide thermique circulant à l'intérieur de ces plaques.

Les plaques de l'échangeur de chaleur, qui servent également d'éléments turbulateurs, peuvent être plates, pliées (angle obtu) ou cintrées dans le sens de la rotation de l'agitateur, et leur surface n'est de préférence pas lisse (par exemple légèrement bosselée).

Selon une variante de l'invention, le dispositif d'agitation et de circulation interne est du type autoaspirant; il peut comporter un arbre creux central rotatif présentant des ouvertures d'aspiration de gaz dans sa partie supérieure et une turbine de gazage dans sa partie inférieure, l'entrée de liquide dans cette turbine étant située dans la partie inférieure de celle-ci. Ce dispositif d'agitation peut être en outre muni de circulateurs additionnels.

Enfin, le récipient de l'appareillage de l'invention peut comporter dans sa partie supérieure, au niveau des ouvertures d'aspiration du gaz du dispositif d'agitation, une chambre étanche.

L'invention sera maintenant décrite plus en détail en référence aux dessins annexés illustrant schématiquement et à titre d'exemple uniquement une forme d'exécution de l'appareillage de réaction gaz-liquide.

Les figures 1 et 2 en sont des vues respectivement en coupe verticale et en coupe horizontale.

Les figures 3 et 4 sont des vues de détails illustrant un dispositif d'agitation auto-aspirant utilisable dans l'appareillage selon l'invention.

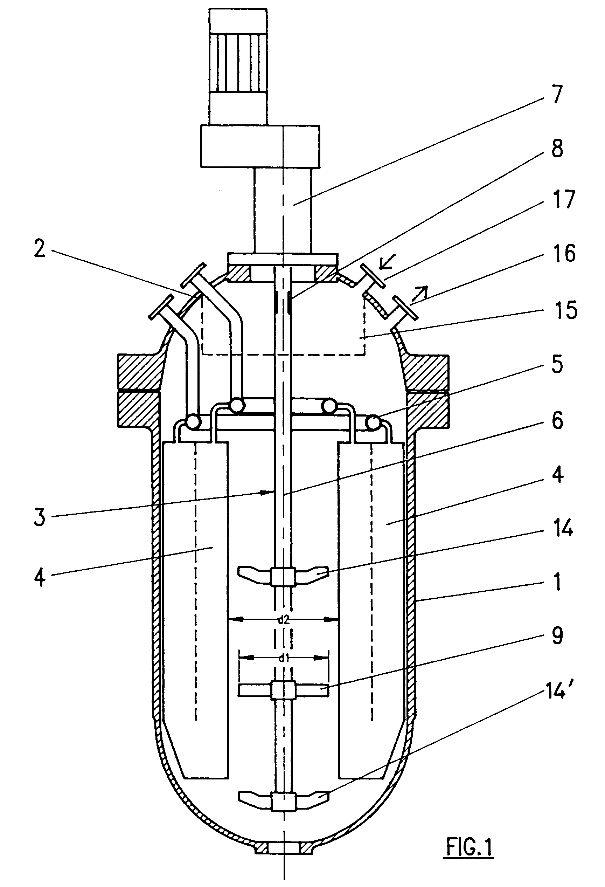

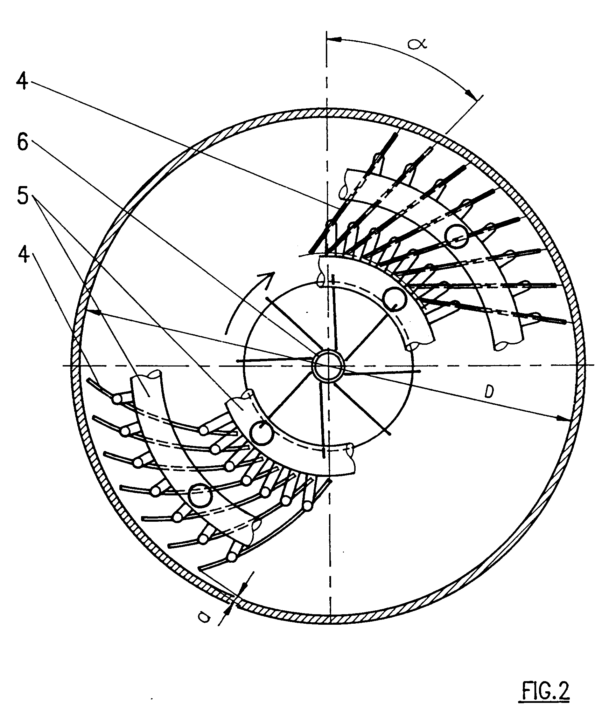

En référence aux figures 1 et 2, l'appareillage de réaction gaz-liquide comporte un récipient 1 résistant à des pressions pouvant aller jusqu'à 100 bar suivant son épaisseur. Sa forme est par exemple cylindrique, le fond bombé étant hémisphérique, elliptique ou de forme similaire. Un fond conique peut aussi être employé. La partie supérieure peut être formée par un couvercle 2 bridé ou soudé, dont la forme n'est pas essentielle pour la présente invention. Pour obtenir une circulation appropriée de liquide et une aspiration efficace de gaz, il convient de maintenir un rapport longueur cylindrique/diamètre compris entre 0,3 et 3, ici ce rapport étant proche de 1. Pour assurer l'introduction du gaz dans le réacteur, ainsi que l'agitation et la mise en circulation du liquide, l'appareillage comporte un dispositif d'agitation 3 du type auto-aspirant, qui sera décrit en détails plus loin.

Pour assurer les échanges thermiques souvent importants, le réacteur comporte enfin un échangeur de chaleur interne, formé d'un ensemble de plaques 4 réparties uniformément dans le réacteur et fixées par leur extrêmités supérieures par exemple à un ou plusieurs collecteurs 5 dans lequel circule, de même que dans les plaques ellesmêmes, un fluide thermique approprié. Le nombre de plaques 4 est variable et déterminé en fonction de la surface totale d'échange thermique nécessaire. Les meilleures performances sont obtenues en circulant de l'eau pressurisée du fait de ses caractéristiques thermiques favorables. Pour des applications à haute température, d'autres fluides thermiques (DOWTHERM^{R} par exemple) peuvent être employés. Il est préférable que les plaques d'échange soient ordonnées de manière verticale, afin d'éviter des dépôts de solides ou de catalyseur présents dans le mélange réactionnel lors des opérations de vidange de l'appareil selon la présente invention. De cette manière, les opérations de lavage du réacteur sont simplifiées et facilitées, ce qui représente un avantage par rapport aux systèmes habituels comportant des serpentins de chauffage/refroidissement ou autres éléments tubulaires.

Les plaques 4 de l'échangeur de chaleur n'ont pas pour seule fonction d'assurer le transfert de chaleur nécessaire, mais aussi de favoriser la circulation appropriée du liquide dans le réacteur en agissant comme turbulateurs. A cet effet, il convient de fixer les plaques avec un angle α dans le sens de la rotation de l'agitateur compris entre 0 et 70° par rapport au rayon, de préférence entre 30 et 55° (voir figure 2). Les plaques peuvent être plates, pliées (angle obtu) ou cintrées afin d'améliorer leur résistance mécanique. Dans le dernier cas, qui correspond à celui illustré à titre d'exemple, on a constaté de manière surprenante une amélioration de la circulation du liquide et une réduction de la coalescence des bulles du gaz réactant lorsque le rayon de cintrage est dans le sens de la rotation du liquide et est compris dans une valeur égale à 0,5 à 2 de celle du diamètre interne de la cuve.

Pour assurer une bonne circulation du liquide et un échange thermique favorable, il convient de dimensionner les plaques de manière à ce que le diamètre interne apparent d2 du faisceau de plaques soit égal à une valeur 1,05 à 1,6 fois plus élevée que celui d1 du dispositif d'agitation 3. Dans le même but, l'espacement a entre l'extrémité des plaques 4 et la cuve de réaction 1 doit être avantageusement compris entre 5 et 400 mm quelle que soit la grandeur de la cuve, de préférence environ 20 mm.

Lorsqu'une surface totale importante d'échange de chaleur est nécessaire, des plaques intermédiaires (non illustrées) peuvent être intégrées avantageusement dans le faisceau de plaques de l'échangeur de chaleur. Elles sont placées à équidistance des plaques principales 4 et leur diamètre interne apparent sera au moins égal à 0,2 fois celui du diamètre de la cuve, préférentiellement à une valeur égale ou proche de la moitié du diamètre de la cuve. N'importe quel type de plaque résistante à une pression intérieure et extérieure peut être utilisé. Selon un mode de réalisation préférentiel de l'invention, il est avantageux d'utiliser des plaques bosselées assurant une meilleure turbulence du liquide agité.

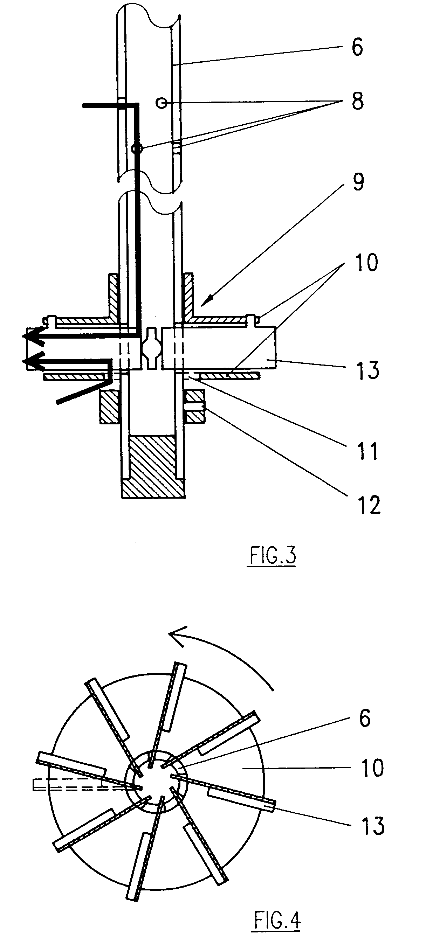

Le couvercle du réacteur 2 comporte une bride sur laquelle est fixé le dispositif d'agitation illustré plus en détails sur les figures 3 et 4. Ce dispositif comporte un arbre creux 6 entraîné en rotation par un moteur 7 et présentant des ouvertures d'aspiration 8 de gaz dans sa partie supérieure et une turbine de gazage 9 située au milieu du faisceau de plaques 4 de l'échangeur de chaleur. Cette turbine 9 est pourvue de flasques de recouvrement 10 et avec une entrée de liquide 11 située, contrairement aux systèmes habituels, dans la partie inférieure. Ceci présente l'avantage d'aspirer le liquide dans une zone pauvre en gaz. L'efficacité des mobiles d'agitation autoaspirants habituels est limitée par la concentration de gaz croissante autour de la turbine, la compressibilité du mélange gaz-liquide étant le facteur limitant la succion qui peut être obtenue par effet Venturi avec l'agitateur. De par la configuration choisie selon la présente invention, on obtient une plus grande plage d'opération. Un dispositif de réglage 12 permet de modifier avantageusement le débit de circulation de liquide à travers la turbine en fonction des besoins spécifiques. Selon un mode de réalisation préférentiel, les ailettes de propulsion 13 de la turbine 9 sont de forme concave ou pliée pour favoriser une meilleure centrifugation du liquide.

Pour améliorer la circulation du liquide dans la cuve et pour prévenir une coalescence trop rapide des bulles de gaz présentes, le dispositif d'agitation 3 peut encore être muni de deux circulateurs additionnels 14,14'. Le circulateur supérieur 14 dirige le liquide vers le bas, alors que le circulateur inférieur 14' favorise la mise en suspension de solides ou de catalyseurs éventuellement présents dans le mélange réactionnel. Le système d'entraînement 7 du dispositif d'agitation 6 est choisi de manière à assurer une étanchéité de l'appareillage sans risque de fuite dans l'environnement, par exemple un système d'entraînement magnétique; d'autres dispositifs faisant appel aux systèmes habituels comportant des garnitures mécaniques de sécurité peuvent également être employés.

Lors de l'exécution de certaines réactions gaz-liquide, il convient de pouvoir soutirer le gaz de réaction afin de le traiter dans des appareillages annexes avant de le recycler dans le réacteur, ce qui nécessite le plus souvent l'utilisation d'un compresseur auxiliaire coûteux. Ceci peut être avantageusement évité avec l'appareillage selon la présente invention en intégrant dans la partie supérieure une chambre étanche 15 située au niveau des ouvertures d'aspiration 8 de gaz du dispositif d'agitation 3. Le gaz de réaction est soutiré par une tubulure 16 et, après passage dans un système de traitement approprié, il peut être recyclé dans le réacteur par la tubulure 17. Le pouvoir d'aspiration d'un tel dispositif d'agitation est en effet suffisant, non seulement pour obtenir un transfert de matière gaz-liquide important, mais aussi pour vaincre les pertes de charge occasionnées par le passage du gaz à traiter dans l'équipement auxiliaire. Des économies tant financières que d'énergie par rapport à l'utilisation d'un compresseur auxiliaire sont ainsi avantageusement réalisées.

Hormis ses performances élevées, un des avantages importants présentés par l'invention réside dans les économies réalisées lors de la construction et l'installation d'un tel réacteur. Par rapport à un système de réacteur à boucle présentant des performances comparables, la réalisation compacte sans éléments extérieurs permet de réaliser des gains de construction du fait du nombre inférieur d'éléments présents, de l'espace nécessaire moindre pour l'installation de l'équipement et des structures portantes moins volumineuses requises. L'absence d'éléments d'étanchéité en contact avec du liquide ou des suspensions et soumis à des contraintes élevées du fait des pressions et températures de travail minimise avantageusement aussi les travaux de maintenance et d'entretien habituellement requis avec un réacteur à boucle par exemple.

L'appareillage selon l'invention est particulièrement adapté pour l'exécution de réactions d'hydrogénation catalytique en phase liquide du fait de sa capacité très élevée de transfert d'hydrogène dans la phase liquide (kla), de la turbulence élevée renouvelant fréquemment les couches de matière entourant le catalyseur et de sa puissance élevée de transfert de chaleur. On a aussi été surpris de constater dans de nombreux cas une sélectivité particulièrement élevée lors de l'exécution de réductions connues comme étant difficiles. La vitesse de désactivation du catalyseur utilisé et par conséquent sa consommation s'est aussi révélée être dans certains cas inférieure à ce qui est observé sur des réacteurs industriels conventionnels. Ceci est attribué au contrôle rigoureux des températures de travail pouvant être atteintes du fait de la combinaison judicieuse des éléments de transfert de chaleur et du dispositif d'agitation selon l'invention, a l'absence de points chauds dans la masse réactionnelle, sources de réactions secondaires éventuelles, et des conditions isothermes avantageuses ainsi obtenues et au fait que le catalyseur est en tous points du réacteur en présence d'un milieu riche en hydrogène ce qui ralentit les phénomènes d'empoisonnement.

L'appareillage selon l'invention permet donc d'obtenir une vitesse élevée de transfert de matière gaz-liquide, tout en nécessitant une puissance modérée absorbée par le système. Il permet également d'obtenir une puissance élevée de chauffage et de refroidissement tout en assurant un contrôle rigoureux de la température du milieu réactionnel et permet de travailler à des pressions jusqu'à 100 bar et des températures jusqu'à 300°C dans des conditions aussi parfaites que possible d'étanchéité sans risque de fuite pouvant affecter l'environnement.

Enfin, un autre avantage de l'appareillage selon l'invention consiste en ce qu'il est possible d'extrapoler ses caractéristiques de manière fiable d'un dispositif de laboratoire à une installation industrielle.

## Revendications

1. Appareillage de réaction gaz-liquide comportant un récipient étanche et résistant à pression, un dispositif d'agitation rotatif assurant la mise en contact gaz-liquide et un dispositif échangeur de chaleur, caractérisé par le fait que ce dispositif échangeur de chaleur est constitué par un ensemble de plaques disposées approximativement verticalement autour du dispositif d'agitation et de manière à former un angle compris entre 0 et 70° par rapport au rayon dans le sens de rotation du dispositif d'agitation, et un fluide thermique circulant à l'intérieur de ces plaques.

2. Appareillage selon la revendication 1, caractérisé par le fait que les plaques présentent une surface non lisse et qu'elles sont plates, pliées ou cintrées dans le sens de rotation du dispositif d'agitation.

3. Appareillage selon la revendication 1 ou la revendication 2, caractérisé par le fait que ledit récipient est cylindrique et que lesdites plaques sont fixées par leur partie supérieure au moins à un collecteur servant à l'introduction et à l'évacuation du fluide thermique, et de telle sorte que leurs arêtes d'extrêmités latérales sont à proximité de la paroi interne du récipient.

4. Appareillage selon l'une des revendications 1 à 3, caractérisé par le fait que le dispositif échangeur de chaleur comporte des plaques intermédiaires intercalées entre lesdites plaques et présentant une surface inférieure à celles-ci.

5. Appareillage selon l'une des revendications 1 à 4, caractérisé par le fait que le dispositif d'agitation comporte un arbre creux rotatif présentant des ouvertures d'aspiration de gaz dans sa partie supérieure, une turbine de gazage, et par le fait que cette turbine de gazage comporte une entrée de liquide dans sa partie inférieure.

6. Appareillage selon la revendication 5, caractérisé par le fait que le dispositif d'agitation comporte encore un ou plusieurs circulateurs solidaires de l'arbre creux rotatif.

7. Appareillage selon l'une des revendications 1 à 6, caractérisé par le fait qu'il comporte une chambre étanche dans la partie supérieure du récipient.

8. Appareillage selon la revendication 7, caractérisé par le fait que ladite chambre étanche est située au niveau des ouvertures d'aspiration de gaz pratiquées dans l'arbre creux du dispositif d'agitation.

## Claims

1. An apparatus for carrying out gas - liquid reactions including a sealed pressure resistant vessel, a rotatory stirring device for ensuring the gas - liquid contact and a heat exchanger device, characterized in that this heat exchanger device is formed by an assembly of plates arranged approximately vertically around the stirring device and in such a manner as to form an angle comprised between 0 and 70° relative to the radius, in the direction of rotation of the stirring device and in that a thermal fluid circulates inside these plates.

2. An apparatus according to claim 1, characterized in that the plates exhibit a non smooth surface and in that they are flat, folded or curved in the direction of rotation of the stirring device.

3. An apparatus according to claim 1 or claim 2, characterized in that said vessel is cylindrical and said plates are fastened by their upper part at least to one manifold provided for the introduction and the evacuation of the thermal fluid, in such a manner that their lateral end edges be located in the vicinity of the internal wall of the vessel.

4. An apparatus according to one of claims 1 to 3, characterized in that the heat exchanger device includes intermediate plates placed between said plates and presenting a lower surface thereto.

5. An apparatus according to one of claims 1 to 4, characterized in that the stirring device includes a hollow rotatory shaft having in its upper part openings for the intake of gas and a gassing turbine, which gassing turbine includes an inlet for the liquid in its lower part.

6. An apparatus according to claim 5, characterized in that the stirring device further includes one or several circulation promoting devices integral with the rotatory hollow shaft.

7. An apparatus according to one of claims 1 to 6, characterized in that it includes a sealed chamber in the upper part of the vessel.

8. An apparatus according to claim 7, characterized in that said sealed chamber is situated at the level of the intake openings provided in the hollow shaft of the stirring device.

## Patentansprüche

1. Vorrichtung für Gas-Flüssigkeits-Reaktionsen mit einem dichten, druckfesten Gefäss, worin eine umlaufende Rührvorrichtung den Gas-Flüssigkeits-Kontakt gewährleistet, und mit einer Wärmeaustauschvorrichtung, dadurch gekennzeichnet, dass diese Wärmeaustauschvorrichtung aus einem Satz von Platten besteht, die angenähert senkrecht um die Rührvorrichtung herum angeordnet sind, und zwar so, dass sie in der Drehrichtung der Rührvorrichtung einen Winkel zwischen 0 und 70° zum Radius bilden, und dass eine Wärmeübertragungsflüssigkeit im Inneren dieser Platten umläuft.

2. Vorrichtung gemäss Anspruch 1, dadurch gekennzeichnet, dass diese Platten keine glatte Oberfläche darbieten und dass sie eben oder in der Drehrichtung der Rührvorrichtung abgeknickt oder gewölbt sind.

3. Vorrichtung gemäss Anspruch 1 oder Anspruch 2, dadurch gekennzeichnet, dass das benannte Gefäss zylindrisch ist und dass die benannten Platten mit ihren oberen Partien an zumindest einem Sammler befestigt sind, der der Zu- und Abführung der Wärmeübertragungsflüssigkeit dient, und zwar so, dass sich ihre seitlichen Aussenkanten in der Nähe der Gefässinnenwand befinden.

4. Vorrichtung gemäss einem der Ansprüche 1 bis 3, dadurch gekennzeichnet, dass die Wärmeaustauschvorrichtung Zwischenplatten umfasst, die zwischen die benannten Platten eingefügt sind und eine kleinere Oberfläche als diese Platten haben.

5. Vorrichtung gemäss einem der Ansprüche 1 bis 4, dadurch gekennzeichnet, dass die Rührvorrichtung eine umlaufende Hohlwelle, die in ihrer oberen Partie Gasansaugöffnungen aufweist, sowie eine Begasungsturbine aufweist, und dadurch, dass diese Begasungsturbine einen Flüssigkeitseinlass in ihrer unteren Partie aufweist.

6. Vorrichtung gemäss Anspruch 5, dadurch gekennzeichnet, dass die Rührvorrichtung weiterhin ein oder mehrere Umwälzer aufweist, die mit der umlaufenden Hohlwelle fest verbunden sind.

7. Vorrichtung gemäss einem der Ansprüche 1 bis 6, dadurch gekennzeichnet, dass sie eine dichte Kammer im oberen Gefässteil umfasst.

8. Vorrichtung gemäss Anspruch 7, dadurch gekennzeichnet, dass sich die benannte dichte Kammer auf der Höhe der Gasansaugöffnungen befindet, die in der Hohlwelle der Rührvorrichtung angebracht sind.
